# EUROPEAN PATENT APPLICATION

(11) **EP 4 531 065 A1**
(43) Date of publication of application: **02.04.2025**
(21) Application number: 24190875.5
(22) Date of filing: 25.07.2024
(51) Int. Cl.: H01G 4/30, H01G 4/12, H01G 4/232

(54) **MULTILAYER ELECTRONIC COMPONENT**

(30) Priority: 26.09.2023 KR 20230129208
(71) Applicant: Samsung Electro-Mechanics Co., Ltd., Suwon-si, Gyeonggi-do 16674 (KR)
(72) Inventor: Lee, Chae Dong, Suwon-si, Gyeonggi-do (KR); Hwang, Jung Wun, Suwon-si, Gyeonggi-do (KR); Park, Sun Kyoung, Suwon-si, Gyeonggi-do (KR); Oh, Ji Hye, Suwon-si, Gyeonggi-do (KR)
(74) Representative: Grünecker Patent- und Rechtsanwälte PartG mbB

(57) **Abstract**

A multilayer electronic component includes a body including a dielectric layer and an internal electrode disposed on the dielectric layer, an external electrode including a base electrode layer connected to the internal electrode, and an interface layer disposed between an end of the dielectric layer and the base electrode layer. The interface layer includes a first glass containing Ba, Zn, and Si. The base electrode layer includes a second glass containing Ba and Si. When an average molar ratio (Ba/Si) of Ba to Si contained in the first glass is M1 and an average molar ratio (Ba/Si) of Ba to Si contained in the second glass is M2, M1 and M2 satisfy M1/M2≥1.5.

## Description

### CROSS-REFERENCE TO RELATED APPLICATION(S)

This application claims the benefit of priority to Korean Patent Application No. 10-2023-0129208 filed on September 26, 2023 in the Korean Intellectual Property Office, the disclosure of which is incorporated herein by reference in its entirety.

### TECHNICAL FIELD

The present disclosure relates to a multilayer electronic component.

### BACKGROUND

MultiLayer Ceramic Capacitors (MLCCs), multilayer electronic components, are mounted on the printed circuit boards of various electronic products such as video devices such as liquid crystal displays (LCDs) and plasma display panels (PDPs), computers, smartphones, and mobile phones, and are chip-type condensers serving as charging or discharging electricity. Such multilayer ceramic capacitors may be used as components in various electronic devices due to a small size, high capacitance, and ease of mounting.

Currently, sintered electrodes formed of metal such as Cu and glass are mainly used as external electrodes of multilayer ceramic capacitors. The metal component of sintered electrodes provides conductivity to the sintered electrode, while the glass provides adhesion between the sintered electrode and the body and may penetrate into voids within the sintered electrode to ensure hermetic sealing.

Generally, Si oxide, a network former, is used as a glass component of a sintered electrode. Si oxide has strong corrosion resistance, and as a result, may prevent the erosion of the glass by a plating solution and the resulting penetration of the plating solution.

However, Si oxide has a high softening temperature, and may thus have low wettability to copper (Cu). As a result, it may not sufficiently fill the voids in the sintered electrode, causing a problem in which hermetic sealing of the sintered electrode cannot be guaranteed.

To prevent this problem, research into the external electrode of a multilayer ceramic capacitor that may guarantee both corrosion resistance and sealing properties is being undertaken by appropriately adding an oxide functioning as a network modifier, as the glass component.

### SUMMARY

An aspect of the present disclosure is to provide a multilayer electronic component having high reliability by preventing penetration of external moisture or plating solution.

According to an aspect of the present disclosure, a multilayer electronic component includes a body including a dielectric layer and an internal electrode alternately disposed with the dielectric layer; an external electrode including a base electrode layer connected to the internal electrode; and an interface layer disposed between an end of the dielectric layer and the base electrode layer. The interface layer includes a first glass containing Ba, Zn, and Si. The base electrode layer includes a second glass containing Ba and Si. When an average molar ratio (Ba/Si) of Ba to Si contained in the first glass is M1 and an average molar ratio (Ba/Si) of Ba to Si contained in the second glass is M2, M1 and M2 satisfy M1/M2≥1.5.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment;
FIG. 2 is an exploded perspective view schematically illustrating a body of FIG. 1;
FIG. 3 is a cross-sectional view schematically illustrating a cross-section taken along line I-I' of FIG. 1;
FIG. 4 is a cross-sectional view schematically illustrating a cross section taken along line II-II' of FIG. 1; and
FIG. 5 is an enlarged view of area K1 in FIG. 3.

### DETAILED DESCRIPTION

Hereinafter, embodiments of the present disclosure will be described with reference to detailed embodiments and accompanying drawings. However, the embodiments of the present disclosure may be modified in many different forms, and the scope of the present disclosure is not limited to the embodiments described below. In addition, the embodiments of the present disclosure are provided to more completely describe the present disclosure to those skilled in the art. Therefore, the shape and size of elements in the drawings may be exaggerated for clearer explanation, and elements indicated by the same reference numerals in the drawings are the same elements.

In addition, to clearly describe the present disclosure in the drawings, parts irrelevant to the description are omitted, and the size and thickness of each component illustrated in the drawings are arbitrarily illustrated for convenience of description, and thus, the present disclosure is not necessarily limited to the illustrated embodiment. Also, components having the same function within the scope of the same concept are described using the same reference numerals. Furthermore, throughout the specification, when a certain component is said to "include," it means that it may further include other components without excluding other components unless otherwise stated.

In the drawings, the first direction may be defined as the thickness (T) direction, the second direction may be defined as the length (L) direction, and the third direction may be defined as the width (W) direction.

### Multilayer Electronic Component

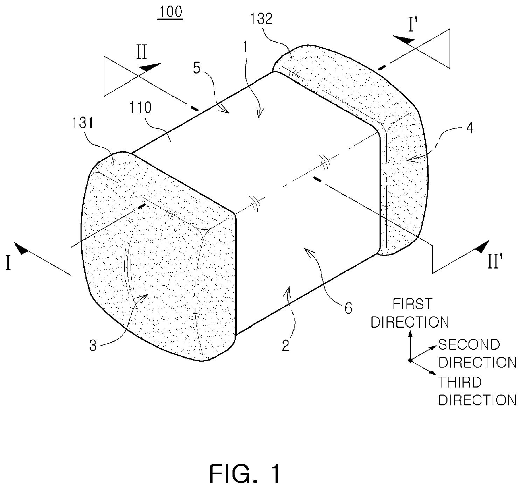

FIG. 1 is a perspective view schematically illustrating a multilayer electronic component according to an embodiment.

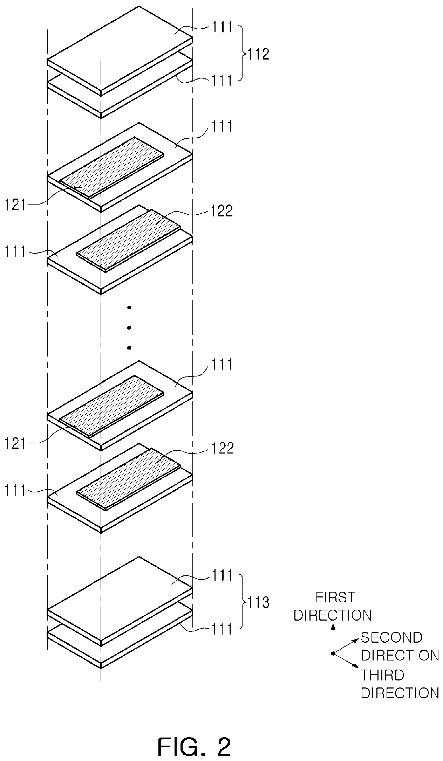

FIG. 2 is an exploded perspective view schematically illustrating a body of FIG. 1.

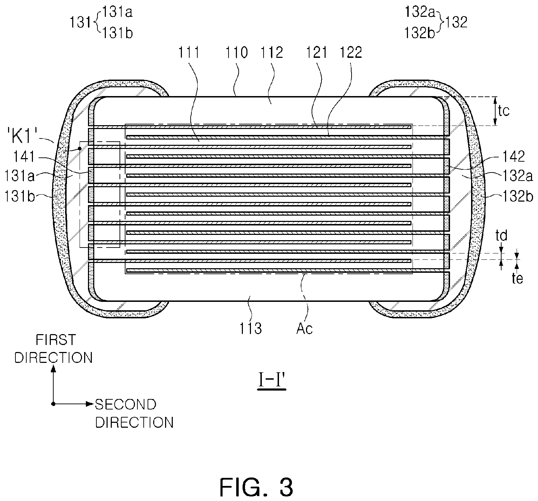

FIG. 3 is a cross-sectional view schematically illustrating a cross-section taken along line I-I' of FIG. 1.

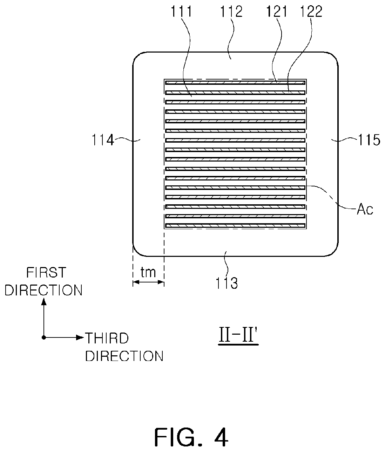

FIG. 4 is a cross-sectional view schematically illustrating a cross section taken along line II-II' of FIG. 1.

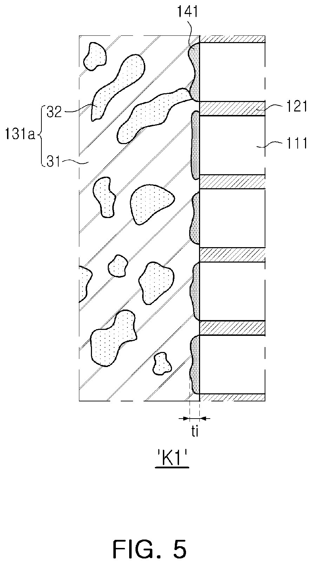

FIG. 5 is an enlarged view of area K1 in FIG. 3.

Hereinafter, a multilayer electronic component 100 according to an embodiment will be described in detail with reference to FIGS. 1 to 5. In addition, a multilayer ceramic capacitor is described as an example of a multilayer electronic component, but the present disclosure is not limited thereto and may be applied to various multilayer electronic components, such as inductors, piezoelectric elements, varistors, or thermistors.

The multilayer electronic component 100 according to an embodiment may include a body 110 including dielectric layers 111 and internal electrodes 121 and 122, external electrodes 131 and 132, and interface layers 141 and 142.

There is no particular limitation on the detailed shape of the body 110, but as illustrated, the body 110 may have a hexahedral shape or a similar shape. Due to shrinkage of the ceramic powder particles contained in the body 110 during the sintering process or polishing of the edges of the body, the body 110 may not have a hexahedral shape with completely straight lines, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in a third direction.

The body 110 may include the dielectric layer 111 and the internal electrodes 121 and 122 alternately disposed with the dielectric layer 111. The plurality of dielectric layers 111 forming the body 110 may be in a sintered state, and the boundaries between adjacent dielectric layers 111 may be integrated to the extent that it is difficult to determine without using a scanning electron microscope (SEM).

For example, the dielectric layer 111 may include a perovskite-type compound represented by ABO₃ as a main component. The perovskite-type compound represented by ABO₃ may be, for example, BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which calcium (Ca), zirconium (Zr) and the like are partially solid-solubilized in BaTiO₃, or the like.

For example, the internal electrodes 121 and 122 may be alternately disposed with the dielectric layer 111 in the first direction. The first internal electrode 121 and the second internal electrode 122, a pair of electrodes with different polarities, may be disposed to face each other with the dielectric layer 111 interposed therebetween. The first internal electrode 121 and the second internal electrode 122 may be electrically separated from each other by the dielectric layer 111 disposed therebetween.

The first internal electrode 121 is spaced apart from the fourth surface 4 and may be connected to the first external electrode 131 on the third surface 3. The second internal electrode 122 is spaced apart from the third surface 3 and may be connected to the second external electrode 132 on the fourth surface 4.

The conductive metal included in the internal electrodes 121 and 122 may be at least one of Ni, Cu, Pd, Ag, Au, Pt, Sn, W, Ti, and alloys thereof, and in more detail, may contain Ni as a main component, but the present disclosure is not limited thereto.

An average thickness td of the dielectric layer 111 does not need to be particularly limited, but may be, for example, 0.1 um to 10 um. An average thickness te of the internal electrodes 121 and 122 does not need to be particularly limited, but may be, for example, 0.05 um to 3.0 um. Additionally, the average thickness td of the dielectric layer 111 and the average thickness te of the internal electrodes 121 and 122 may be arbitrarily set depending on required characteristics or use. For example, in the case of high-voltage automotive electronic components to obtain miniaturization and high capacitance, the average thickness td of the dielectric layer 111 may be less than 2.8 um, and the average thickness te of the internal electrodes 121 and 122 may be less than 1 um. In addition, in the case of small-sized IT electronic components to obtain miniaturization and high capacitance, the average thickness td of the dielectric layer 111 may be 0.4 um or less, and the average thickness te of the internal electrodes 121 and 122 may be 0.4 um or less.

The average thickness td of the dielectric layer 111 and the average thickness te of the internal electrodes 121 and 122 refer to the sizes of the dielectric layer 111 and the internal electrodes 121 and 122 in the first direction, respectively. The average thickness td of the dielectric layer 111 and the average thickness te of the internal electrodes 121 and 122 may be measured by scanning the cross section of the body 110 in the first and second directions with a scanning electron microscope (SEM) at 10,000X magnification. In more detail, the average thickness td of the dielectric layer 111 may be obtained by measuring the thicknesses of multiple points of one dielectric layer 111, for example, 30 points at equal intervals in the second direction and then taking the average value thereof. In addition, the average thickness te of the internal electrodes 121 and 122 may be obtained by measuring the thicknesses of multiple points of one internal electrode 121 or 122, for example, at 30 points at equal intervals in the second direction and then taking the average value thereof. The 30 equally spaced points may be designated in a capacitance forming portion Ac. On the other hand, if this average value measurement is respectively performed on the 10 dielectric layers 111 and the 10 internal electrodes 121 and 122 and then the average value is measured, the average thickness td of the dielectric layer 111 and the average thickness te of the internal electrodes 121 and 122 may be further generalized.

The body 110 may include a capacitance forming portion Ac disposed inside the body 110 and including first and second internal electrodes 121 and 122 alternately disposed with the dielectric layer 111 interposed therebetween to form capacitance, and a first cover portion 112 and a second cover portion 113 respectively disposed on both sides of the capacitance forming portion Ac, opposing in the first direction. The cover portions 112 and 113 may basically serve to prevent damage to the internal electrodes due to physical or chemical stress. The cover portions 112 and 113 may have the same configuration as the dielectric layer 111 except that they do not include internal electrodes.

An average thickness tc of the cover portions 112 and 113 does not need to be particularly limited. For example, the average thickness tc of the cover portions 112 and 113 may be arbitrarily set depending on required characteristics or uses. For example, to miniaturize multilayer electronic components and increase capacitance of multilayer electronic components, the average thickness tc of the cover portions 112 and 113 may be 300 um or less, 100 um or less, 30 um or less, or 20 um or less, but the present disclosure is not limited thereto. In this case, the average thickness tc of the cover portions 112 and 113 refer to the average thickness of each of the first cover portion 112 and the second cover portion 113.

The average thickness tc of the cover portions 112 and 113 may refer to the average size of the cover portions 112 and 113 in the first direction, and may be an average of the sizes in the first direction, measured at five points at equal intervals in the cross section of the body 110 in the first and second directions.

The body 110 may include a first margin portion 114 and a second margin portion 115 respectively disposed on both sides of the capacitance forming portion Ac, facing each other in the third direction. For example, the margin portions 114 and 115 may refer to the areas between both ends of the internal electrodes 121 and 122 and the boundary surface of the body 110 in a cross section of the body 110 in the first and third directions.

The margin portions 114 and 115 may include the same material as the dielectric layer 111 except that they do not include the internal electrodes 121 and 122. The margin portions 114 and 115 may basically serve to prevent damage to the internal electrodes 121 and 122 due to physical or chemical stress.

The margin portions 114 and 115 may be formed by applying conductive paste for internal electrodes on a ceramic green sheet except for areas where the margin portion is to be formed and then sintering. Alternatively, to suppress the level difference caused by the internal electrodes 121 and 122, after performing cutting so that the internal electrodes 121 and 122 are exposed to the fifth and sixth surfaces 5 and 6 of the body after lamination, a single dielectric layer or two or more dielectric layers may be stacked on both sides of the capacitance forming portion Ac opposing each other in the third direction, thereby forming the margin portions 114 and 115.

An average thickness tm of the margin portions 114 and 115 does not need to be particularly limited. For example, the average thickness tm of the margin portions 114 and 115 may be arbitrarily set depending on required characteristics or purposes. For example, to miniaturize multilayer electronic components and increase capacitance of multilayer electronic components, the average thickness tm of the margin portions 114 and 115 may be 100 um or less, 20 um or less, or 15 um or less, but the present disclosure is not limited thereto. In this case, the average thickness tm of the margin portions 114 and 115 refers to the average thickness of each of the first margin portion 114 and the second margin portion 115.

The average thickness tm of the margin portions 114 and 115 may refer to the average size of the margin portions 114 and 115 in the third direction, and may be the average value of the sizes thereof in the third direction measured at five equally spaced points in the cross sections of the body 110 in the first and third directions.

The external electrodes 131 and 132 may be disposed on the third and fourth surfaces 3 and 4 of the body 110, and may extend on portions of the first, second, fifth, and sixth surfaces 1, 2, 5 and 6. The external electrodes 131 and 132 may include a first external electrode 131 disposed on the third surface 3 and a second external electrode 132 disposed on the fourth surface 4.

The external electrodes 131 and 132 may include base electrode layers 131a and 132a connected to the internal electrodes 121 and 122, and plating layers 131b and 132b disposed on the base electrode layers 131a and 132a. For example, the first external electrode 131 may include a first base electrode layer 131a connected to the first internal electrode 121 and a first plating layer 131b disposed on the first base electrode layer 131a, and the second external electrode 132 may include a second base electrode layer 132a connected to the second internal electrode 122 and a second plating layer 132b disposed on the second base electrode layer 132a.

The drawings illustrate a structure in which the multilayer electronic component 100 has two external electrodes 131 and 132, but the structure is not limited thereto. The number or shape of the external electrodes 131 and 132 may be changed depending on the shape of the internal electrodes 121 and 122 or other uses.

The interface layers 141 and 142 may be disposed between the ends of the dielectric layer 111 and the base electrode layers 131a and 132a. For example, the interface layers 141 and 142 may include a first interface layer 141 disposed between the third surface 3 and the first base electrode layer 131a, and a second interface layer 142 disposed between the fourth surface 4 and the second base electrode layer 132a. The first interface layer 141 may be disposed in contact with the third surface 3, and the second interface layer 142 may be disposed in contact with the fourth surface 4. The interface layers 141 and 142 are disposed on the ends of the dielectric layer 111, but may cover portions of the internal electrodes 121 and 122. Additionally, when observing the cross section in the first and second directions, the interface layers 141 and 142 may completely cover the ends of one or more internal electrodes 121 and 122, but since the internal electrodes also extend in the third direction, the base electrode layers 141a and 142a are in direct contact with the internal electrodes 121 and 122 to ensure electrical connection between the internal electrodes 121 and 122 and the external electrodes 131 and 132.

Hereinafter, the base electrode layer and the interface layer will be described in more detail with reference to FIG. 5. The K1 area illustrated in FIG. 5 is an enlarged portion of the first base electrode layer 131a and the first interface layer 141, but the first base electrode layer 131a and the second base electrode layer 132a have similar structures, and the first interface layer 141 and the second interface layer 142 have similar structures. Therefore, the description of the first base electrode layer 131a and the first interface layer 141 is considered to include the description of the second base electrode layer 132a and the second interface layer 142.

According to an embodiment, the interface layer 141 may include first glass containing Ba, Zn, and Si. Ba, Zn, and Si included in the first glass may each exist in oxide form. The interface layer 141 may include first glass as a main component, and may also partially include components included in the dielectric layer 111, the internal electrode 121, and/or the base electrode layer 131a. For example, the interface layer 141 may further include at least one of Mg, Al, Cu, Ca, B, and Sr.

The fact that the interface layer 141 contains first glass as a main component means that the interface layer 141 does not contain an intentionally added metal component, except for the metal diffused from the internal electrode 121 or the base electrode layer 131a. Accordingly, the interface layer 141 may include Ba, Zn, and Si as main components. In an embodiment, among the elements constituting the interface layer 141, a fraction of the total number of moles of Ba, Zn, and Si relative to the total number of moles of the remaining elements excluding oxygen may be 0.5 or more.

The base electrode layer 131a may include metal 31. The metal 31 included in the base electrode layer 131a may include Cu, Ni, Ag, Pd, Al, Sn, and/or alloys containing the same. The metal 31 included in the base electrode layer 131a may contain Cu or may contain Cu as a main component, but the present disclosure is not limited thereto.

The base electrode layer 131a may include second glass 32. The second glass 32 may be dispersed within the metal 31. The second glass 32 may include Ba and Si, and in more detail, the second glass 32 may include Ba, Zn, and Si. Ba, Zn, and Si included in the second glass may each exist in oxide form. In an embodiment, at least a portion of the second glass 32 may be in contact with the first glass. As a result, the bonding strength between the base electrode layer 131a and the interface layer 141 may be improved.

As described above, Si contained in the first and second glasses functions as a network former, and has strong corrosion resistance and may prevent corrosion of the glass by the plating solution and subsequent penetration of the plating solution. However, Si oxide has a high softening temperature and low wettability to metals such as Cu. Accordingly, if the second glass 32 is formed of only Si oxide, the second glass 32 cannot sufficiently fill the voids in the base electrode layer 131a, and these voids may be a moisture penetration path through which external moisture penetrates into the interior of the body 110.

Ba and Zn contained in the first and second glasses may function as a network modifier. Ba and Zn have lower corrosion resistance than Si, but may play a role in improving the sealing properties of the base electrode layer 131a and the interface layer 141 by lowering the softening temperature. In an embodiment, the first and second glasses may further include at least one of Al, Mg, Ca, and Sr. Al, Mg, Ca, and Sr may function as network modifiers together with Ba and Zn.

On the other hand, since the base electrode layer 131a is disposed in contact with the plating layer, the corrosion resistance characteristics of the second glass 32 included in the base electrode layer 131a may be more important than the first glass included in the interface layer 141, and accordingly, the second glass 32 may have a higher Si concentration (at%) than the first glass. Since the interface layer 141 is disposed further inwardly than the base electrode layer 131a and thus is not disposed in contact with the plating layer, the first glass may have a higher Ba concentration (at%) than the second glass to implement sealing properties.

Accordingly, when the average molar ratio (Ba/Si) of Ba to Si contained in the first glass is M1 and the average molar ratio (Ba/Si) of Ba to Si contained in the second glass is M2, M1> M2 may be satisfied. For example, the interface layer 141 including the first glass with a relatively high average molar ratio of Ba to Si may effectively seal the surface of the body 110, and the base electrode layer 131a including the second glass with a relatively low average molar ratio of Ba to Si may effectively suppress plating solution penetration.

According to an embodiment of the present disclosure, the M1 and M2 may satisfy M1/M2≥1.5. When M1/M2 is 1.5 or more, the corrosion resistance and sealing performance improvement effects of the present disclosure may be more significant. For example, if M1 is too low compared to M2, the sealing performance of the interface layer 141 may be deteriorated, and if M2 is too high compared to M1, the corrosion resistance of the base electrode layer 131a may be deteriorated.

The upper limit of M1/M2 does not need to be particularly limited, but, for example, M1/M2≤83 may be satisfied. If M1 is too high, the first glass of the interface layer 141 may be resoftened and leave an original position thereof during the sintering process of the base electrode layer 131a, and thus the surface sealing performance of the body 110 may be reduced. In addition, if M1/M2 exceeds 83, a significant difference in sintering behavior may occur due to a difference in softening temperature between the first glass and the second glass, which may reduce the corrosion resistance and sealing performance improvement effects in the present disclosure.

There is no need to particularly limit each of M1 and M2, and it is sufficient that M1/M2 is 1.5 or more. However, it may be preferable that M1 is 0.2 or more and 3.5 or less. If M1 is less than 0.2, the sealing property improvement effect of the present disclosure may be minimal, and if M1 is more than 3.5, the re-softening phenomenon of the first glass described above may occur.

Additionally, the M2 may be 0.01 or more and less than 0.2. If M2 is less than 0.01, the above-described difference in sintering behavior may occur, and if M2 is more than 0.2, the corrosion resistance improvement effect of the present disclosure may be minimal.

An example of a method for measuring M1 and M2 will be described. First, an image of a cross section in the first and second directions passing through the center of the body 110 in the third direction is obtained using a scanning electron microscope (SEM). Next, after measuring the content (at%) of the Si element and the content (at%) of the Ba element through energy dispersive spectroscopy (EDS) at an arbitrary point in the first glass, the measured Ba element content is divided by the Si element content to obtain the molar ratio of Ba to Si. After performing these EDS measurements at five or more random points in the first glass, the M1 may be measured by taking the average value of the measured molar ratio of Ba to Si. In addition, after measuring the content (at%) of the Si element and the content (at%) of the Ba element through energy dispersive spectroscopy (EDS) at an arbitrary point in the second glass, the measured Ba element content may be divided by the Si element content to obtain the molar ratio of Ba to Si. After performing these EDS measurements at five or more random points in the second glass, the M2 may be measured by taking the average value of the measured molar ratio of Ba to Si.

In an embodiment, the average molar ratio (Zn/Si) of Zn to Si contained in the first glass may be greater than the average molar ratio (Zn/Si) of Zn to Si contained in the second glass. Like Ba, Zn may play a role in implementing sealing properties. For example, the interface layer 141 including the first glass with a relatively high average molar ratio of Zn to Si may effectively seal the surface of the body 110, and the base electrode layer 131a including the second glass with a relatively low average molar ratio of Zn to Si may effectively suppress plating solution penetration.

The thickness of the interface layer 141 does not need to be particularly limited. However, it may be desirable for the average thickness ti of the interface layer 141 to be greater than 2 um and less than or equal to 8 um. If the average thickness ti of the interface layer 141 is 2 um or less, the effect of improving the sealing performance in the present disclosure may be minimal. In addition, if the average thickness ti of the interface layer 141 is more than 8 µm, the electrical connectivity between the internal electrode 121 and the base electrode layer 131a may be reduced, and accordingly, there is a risk that the capacitance of the multilayer electronic component 100 may be reduced. The average thickness ti of the interface layer 141 refers to the average size of the interface layer 141 in the second direction. The average thickness ti of the interface layer 141 may be measured by obtaining an image of a cross-section in the first and second directions, passing through the center of the body 110 in the third direction, using a scanning electron microscope (SEM), and then by measuring the thicknesses of the interface layer 141 at multiple points of the interface layer 141 disposed on one dielectric layer 111, for example, five points at equal intervals in the first direction, and then taking the average value thereof. In addition, if these average value measurements are performed on the respective interface layers 141 disposed on five or more dielectric layers 111 and then the average value is measured (for example, measured at a total of 25 or more points), the average thickness of the interface layer 141 may be more generalized.

The plating layers 131b and 132b may improve mounting characteristics. The type of the plating layers 131b and 132b is not particularly limited, and may be a plating layer containing Ni, Sn, Pd, Cu and/or alloys thereof, and may be formed of a plurality of layers. The plating layers 131b and 132b may be, for example, Ni plating layers or Sn plating layers, or may be formed by sequentially forming a Ni plating layer and a Sn plating layer. Additionally, the plating layers 131b and 132b may include a plurality of Ni plating layers and/or a plurality of Sn plating layers.

On the other hand, although not illustrated, a conductive resin layer containing metal and resin may be disposed between the base electrode layers 131a and 132a and the plating layers 131b and 132b, if necessary.

The overall size of the multilayer electronic component 100 does not need to be particularly limited. For example, the size of the multilayer electronic component 100 in the second direction may be 0.1 mm to 4.5 mm, the size of the multilayer electronic component 100 in the third direction may be 0.05 mm to 3.2 mm, and the size of the multilayer electronic component 100 in the first direction may be 0.05 mm to 2.5 mm.

Hereinafter, an example of a method of manufacturing the above-described multilayer electronic component 100 will be described.

First, ceramic powder to form the dielectric layer 111 is prepared. Examples of ceramic powder may include BaTiO₃ powder, or the like. BaTiO₃ powder may be synthesized, for example, by reacting titanium raw materials such as titanium dioxide with barium raw materials such as barium carbonate. Methods of synthesizing the ceramic powder include, for example, a solid phase method, a sol-gel method, a hydrothermal synthesis method, and the like, but the present disclosure is not limited thereto.

Next, after drying and pulverizing the prepared ceramic powder, a ceramic slurry may be prepared by mixing an organic solvent such as ethanol and a binder such as polyvinyl butyral, the ceramic slurry is applied and dried on a carrier film to prepare a ceramic green sheet.

Next, an internal electrode pattern is formed by printing a conductive paste for internal electrodes containing metal powder, binder, and the like to a predetermined thickness on the ceramic green sheet using a screen printing method or a gravure printing method.

Then, after peeling the ceramic green sheet with the internal electrode pattern printed thereon from the carrier film, a ceramic laminate is formed by stacking ceramic green sheets with internal electrode patterns printed thereon by a predetermined number of layers and pressing the same. The ceramic laminate is cut to have a predetermined chip size. In detail, the binder and the like contained in the cut chip may be removed through a binder removal process. The conditions of the binder removal process may vary depending on the type of binder used and are not particularly limited. Thereafter, the binder-removed chip may be sintered at a temperature of 1000°C or more and 1400°C or less to form the body 110 including the dielectric layer 111 and the internal electrodes 121 and 122.

Next, the interface layer paste provided by mixing the first glass frit, binder, and solvent is applied to the third and fourth surfaces 3 and 4 of the body 110, and then sintered, thereby forming interface layers 141 and 142. There is no need to specifically limit the method of applying the paste for the interface layer to the body, and known methods such as dipping, transfer, and deposition may be used.

The first glass frit may include BaO, ZnO, and SiO₂, and may further include Al₂O₃, MgO, CaO, SrO, and the like, if necessary. In this case, the contents of BaO and SiO₂ added to the interface layer paste may be adjusted, for example, so that the average Ba/Si molar ratio (M1) of the interface layers 141 and 142 after sintering is 0.2 to 3.5. For example, based on 100 moles of the total first glass frit, BaO may be 5 mole to 50 mole parts by weight, ZnO may be 1 mole to 40 mole part by weight, and SiO₂ may be 5 mole to 15 moles, but the present disclosure is not limited thereto. The paste for the interface layer may be sintered at a temperature of, for example, 550°C to 750°C.

Before forming the base electrode layers 131a and 132a, to bring the internal electrodes 121 and 122 and the base electrode layers 131a and 132a into contact with each other, both surfaces of the body 110 on which the interface layers 141 and 142 are formed, in the second direction, may be polished. The method of polishing both surfaces of the body 110 on which the interface layers 141 and 142 are formed in the second direction does not need to be particularly limited, but for example, methods such as barrel polishing, sand blasting, and/or laser polishing may be used.

Then, by sintering after applying a base electrode layer paste containing a mixture of metal powder, second glass frit, binder, and solvent on the interface layers 141 and 142, the base electrode layers 131a and 132a may be formed. The second glass frit may include BaO, ZnO, and SiO₂, and may further include Al₂O₃, MgO, CaO, SrO, and the like, if necessary. In this case, the contents of BaO and SiO₂ added to the base electrode layer paste may be adjusted so that the Ba/Si molar ratio of the base electrode layers 131a and 132a after sintering is, for example, 0.01 or more and less than 0.2. For example, based on 100 parts by weight of the total second glass frit, BaO may be 1 mole to 10 moles, ZnO may be 1 mole to 10 moles, and SiO₂ may be 30 moles to 70 moles, but the present disclosure is not limited thereto. On the other hand, since the paste for the base electrode layer has a higher SiO₂ content than the paste for the interface layer, it may be desirable to sinter at a higher temperature than the temperature at which the paste for the interface layer is sintered, for example, to sinter at a temperature of 750°C to 900°C, but the present disclosure is not limited thereto. r

There is no need to specifically limit the method of forming the plating layers 131b and 132b, and for example, electrolytic plating and/or electroless plating may be used.

However, the above-described manufacturing method is an example, and the method of manufacturing the multilayer electronic component 100 is not limited to the above-described manufacturing method.

### (Experimental Example)

### <Reliability Evaluation according to M1/M2>

Sample No. 1 below was produced in the following manner. First, a ceramic slurry was prepared by mixing BaTiO₃ powder, an organic solvent such as ethanol, and a binder such as polyvinyl butyral, and then the ceramic slurry was applied and dried on a carrier film to prepare a ceramic green sheet. Next, an internal electrode pattern was formed by printing a conductive paste for internal electrodes containing Ni powder, binder, and the like to a predetermined thickness on the ceramic green sheet, and the ceramic green sheets with the internal electrode pattern formed thereon were laminated and cut. Afterwards, a binder removal and sintering process was performed on the stacked chips to form the body.

Afterwards, the interface layer paste provided by mixing the first glass frit, binder, and solvent was applied to the third and fourth surfaces 3 and 4 of the body 110, and then sintered at 650 to 750°C, thereby forming the interface layers 141 and 142. In the case of the contents of BaO, ZnO, and SiO₂ contained in the paste for the interface layer, based on 100 moles of the total first glass frit, BaO was 5 mole to 50 mole parts by weight, ZnO was 1 mole to 40 mole part by weight, and SiO₂ was 5 mole to 15 moles.

Next, a base electrode layer paste provided by mixing Cu powder, a second glass frit, a binder, and a solvent was applied on the interface layer and then sintered at 700 to 850° C, thereby forming a base electrode layer. In the contents of BaO, ZnO, and SiO₂ contained in the paste for the base electrode layer, based on 100 parts by weight of the entire second glass frit, BaO was 1 mole to 10 moles, ZnO was 1 mole to 10 moles, and SiO₂ was 30 mole to 70 moles.

Afterwards, a Ni plating layer and a Sn plating layer were sequentially formed on the base electrode layer to prepare a sample chip of Sample No. 1. The sample chip of sample number 1 was manufactured in the 2012 size (the size in the second direction is approximately 2.0 mm and the size in the third direction is approximately 1.2 mm) with a capacitance of 10uF.

Sample numbers 2 to 8 were produced in the same manner as sample number 1 described above, while the contents of BaO, ZnO, and SiO₂ added to the paste for the interface layer were changed so that the average molar ratio (M1) of Ba/Si in the interface layer after sintering was different from that of Sample No. 1. In detail, going from sample number 2 toward sample number 8, the content of BaO increased compared to SiO₂ added to the interface layer paste.

Thereafter, after obtaining an image by capturing a cross section of the sample chip of each sample number, in the first and second directions, passing through the center of the sample chip in the third direction, with a scanning electron microscope (SEM), the molar ratio of Ba to Si was measured by performing energy dispersive spectroscopy (EDS) on the first glass included in the interface layer. After performing this EDS measurement at five random points in the first glass, M1 was measured by taking the average value of the measured molar ratio of Ba to Si. In the same manner, EDS measurement was performed at five random points in the second glass included in the base electrode layer, and then M2 was measured by taking the average value of the measured molar ratio of Ba to Si. Thereafter, the M1/M2 values of the sample chips of respective sample numbers are listed in Table 1 below.

Afterwards, a voltage of 1.5Vr was applied to 20 sample chips per sample number for 24 hours at a temperature of 85°C and relative humidity of 85%, and cases of even one sample whose Insulation Resistance (IR) value fell to 10% or less of the initial IR value were marked as "X", and cases in which none occurred were marked as "o".

**[Table 1]**

| Sample Number | M1 | M2 | M1/M2 | Reliability Evaluation |
|---|---|---|---|---|
| 1 | 0.021 | 0.042 | 0.5 | X |
| 2 | 0.042 | 0.042 | 1 | X |
| 3 | 0.063 | 0.042 | 1.5 | ○ |
| 4 | 0.084 | 0.042 | 2 | ○ |
| 5 | 0.21 | 0.042 | 5 | ○ |
| 6 | 0.67 | 0.042 | 15.9 | ○ |
| 7 | 1.67 | 0.042 | 39.8 | ○ |
| 8 | 3.5 | 0.042 | 83.3 | X |

Referring to Table 1 above, it can be confirmed that sample numbers 3 to 7 with M1/M2 of 1.5 or more did not cause defects when evaluating moisture resistance reliability. This is because the interface layer seals the surface of the body and prevents external moisture from penetrating into the interior of the body. However, it can be confirmed that sample numbers 1 to 2 where M1/M2 is less than 1.5 and sample number 8 where M1/M2 is more than 83 have defects when evaluating moisture resistance reliability.

### <Reliability Evaluation according to Thickness of Interface layer>

To evaluate reliability according to the thickness of the interface layer, sample chips of sample numbers 9 to 13 were manufactured. First, Sample No. 9 was manufactured in the same manner as Sample No. 1, but the base electrode layer was formed directly without applying the paste for the interface layer.

Sample numbers 10 to 13 were produced in the same manner as sample number 6, and M1/M2 was 15.9. However, the application amount of the interface layer paste was adjusted for respective sample numbers so that the average thicknesses of the interface layers after sintering were different from each other. The average thickness of the interface layer was obtained by obtaining the image of the cross-section thereof in the first and second directions, passing through the center of the body in the third direction, using a scanning electron microscope (SEM), and then by measuring the thicknesses at five points at equal intervals in the first direction in the interface layer disposed on one dielectric layer 111 to measure the average value thereof. In addition, the measurement of the average value was performed on the interface layers disposed on the five dielectric layers 111, and the average thickness of the interface layers 141 measured at a total of 25 points is listed in Table 2 below.

Afterwards, capacitance and reliability evaluation was performed on the sample chips of respective sample numbers. First, the capacitance of a total of 30 sample chips for each sample number was measured using an LCR meter. Among the total 30 sample chips, the case where even one sample chip with a measured capacitance of less than 95% as compared to the nominal capacitance occurred was marked as "X", and the case where none occurred was marked as "o". Reliability evaluation was performed in the same manner as the above-mentioned method, and the case of even one defective sample in which the Insulation Resistance (IR) value fell to 10% or less of the initial IR value was marked as "X" and cases in which none occurred were marked as "o".

**[Table 2]**

| Sample Number | Average Thickness (um) | Capacitance | Reliability Evaluation |
|---|---|---|---|
| 9 | 0 | ○ | X |
| 10 | 2 | ○ | X |
| 11 | 5 | ○ | ○ |
| 12 | 8 | ○ | ○ |
| 13 | 10 | X | ○ |

Referring to Table 2 above, it can be confirmed that when the average thickness of the interface layer is 2 um or less, a defect occurred during moisture resistance reliability evaluation. This is because the interface layer did not sufficiently seal the surface of the body. Additionally, it can be seen that when the average thickness of the interface layer exceeds 8 µm, the capacitance decreases. Accordingly, it can be seen that the average thickness of the interface layer is preferably greater than 2um and 8um or less.

As set forth above, highly reliable multilayer electronic components may be provided by preventing penetration of external moisture or plating liquid.

The present disclosure is not limited by the above-described embodiments and accompanying drawings, but is intended to be limited by the appended claims. Therefore, various forms of substitution, modification and change will be possible by those skilled in the art within the scope of the technical spirit of the present disclosure described in the claims, and this will also be said to fall within the scope of the present disclosure.

In addition, the expression 'an embodiment' does not indicate the same embodiment, and is provided to emphasize and describe different unique characteristics. However, the embodiments presented above are not excluded from being implemented in combination with features of another embodiment. For example, even if a matter described in one specific embodiment is not described in another embodiment, it may be understood as a description related to another embodiment, unless there is a description to the contrary or contradicting the matter in another embodiment.

In addition, expressions such as first and second are used to distinguish one component from another, and do not limit the order and/or importance of the components. In some cases, without departing from the scope of rights, a first element may be named a second element, and similarly, a second element may be named a first element.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and an internal electrode disposed on the dielectric layer;
an external electrode including a base electrode layer connected to the internal electrode; and
an interface layer disposed between an end of the dielectric layer and the base electrode layer,
wherein the interface layer includes a first glass containing Ba, Zn, and Si,
the base electrode layer includes a second glass containing Ba and Si, and
when an average molar ratio (Ba/Si) of Ba to Si contained in the first glass is M1 and an average molar ratio (Ba/Si) of Ba to Si contained in the second glass is M2, M1 and M2 satisfy M1/M2≥1.5.

2. The multilayer electronic component of claim 1, wherein the M1 is 0.2 or more and 3.5 or less.

3. The multilayer electronic component of claim 1, wherein the M2 is 0.01 or more and less than 0.2.

4. The multilayer electronic component of claim 1, wherein the M1 and M2 satisfy M1/M2≤83.

5. The multilayer electronic component of claim 1, wherein an average thickness of the interface layer is more than 2 um and 8 um or less.

6. The multilayer electronic component of claim 1, wherein the second glass further includes Zn, and
an average molar ratio (Zn/Si) of Zn to Si contained in the first glass is greater than an average molar ratio (Zn/Si) of Zn to Si contained in the second glass.

7. The multilayer electronic component of claim 1, wherein at least a portion of the second glass is in contact with the first glass.

8. The multilayer electronic component of claim 1, wherein the first and second glasses each further include at least one of Al, Mg, Ca, and Sr.

9. The multilayer electronic component of claim 1, wherein a fraction of total number of moles of Ba, Zn, and Si relative to a total number of moles of remaining elements excluding oxygen, among elements constituting the interface layer, is 0.5 or more.

10. The multilayer electronic component of claim 1, wherein the base electrode layer includes a metal containing Cu.

11. The multilayer electronic component of claim 1, wherein the external electrode includes a plating layer disposed on the base electrode layer.

12. The multilayer electronic component of claim 1, wherein the base electrode layer is in direct contact with the internal electrode.
